# EUROPÄISCHE PATENTSCHRIFT

(11) **EP 2 957 840 B1**
(45) Veröffentlichungstag und Bekanntmachung des Hinweises auf die Patenterteilung: **02.10.2019**
(21) Anmeldenummer: 14173063.0
(22) Anmeldetag: 18.06.2014
(51) Int. Cl.: F24H 3/04, F24H 9/18, B60H 1/22

(54) **Elektrische Heizvorrichtung**
Electric heating device
Dispositif de chauffage électrique

(43) Veröffentlichungstag der Anmeldung: 23.12.2015
(73) Patentinhaber: MAHLE International GmbH, 70376 Stuttgart (DE)
(72) Erfinder: Zirgel, Thomas, 67390 Heidolsheim (FR)
(74) Vertreter: Grauel, Andreas

(56) Entgegenhaltungen:
- EP-A1- 2 428 747
- EP-A1- 2 607 121
- EP-B1- 2 017 548
- DE-A1-102013 103 433

## Beschreibung

### Technisches Gebiet

Die Erfindung betrifft eine elektrische Heizvorrichtung, insbesondere für ein Kraftfahrzeug.

### Stand der Technik

Elektrische Heizvorrichtungen sind im Stand der Technik bekannt und werden auch als elektrische Zusatzheizungen in einem Kraftfahrzeug eingesetzt. Insbesondere bei Kraftfahrzeugen mit einem verbrauchsoptimierten Verbrennungsmotor und/oder bei einem Elektrofahrzeug werden elektrische Heizvorrichtungen zur Beheizung eines Fahrgastinnenraums des Kraftfahrzeugs und/oder des Motors eingesetzt. Hierbei wird die elektrische Zusatzheizung nach dem Starten des Verbrennungsmotors verwendet, solange der Verbrennungsmotor noch keine ausreichende Wärmeenergie zur Verfügung stellen kann. Die Beheizung des Verbrennungsmotors dient der schnelleren Erreichung eines optimalen Betriebspunkts.

Die Verwendung der elektrischen Heizvorrichtung kann auch für eine Vielzahl von anderen Einsatzzwecken außerhalb des Kraftfahrzeuges vorgesehen sein, beispielsweise im Bereich von Hausinstallationen, zur Raumklimatisierung, in Industrieanlagen und in vielen Bereichen mehr.

Aus dem Dokument EP 2 017 548 B1 oder EP 2 607 121 A1 ist eine elektrische Heizvorrichtung, insbesondere als Zusatzheizung für ein Kraftfahrzeug, bekannt. Die elektrische Heizvorrichtung umfasst mehrere zu einem Heizblock zusammengesetzte Heizelemente, eine Steuereinrichtung zur Ansteuerung der Heizelemente, wobei die Steuereinrichtung und der Heizblock eine bauliche Einheit bilden, und sich zwischen der Steuereinrichtung und dem Heizblock erstreckende Kontakt- und/oder Kühlelemente. Hierbei ist die Steuereinrichtung an einem Steuereinrichtungsträger gehalten und zwischen dem Steuereinrichtungsträger und einem den Heizblock aufnehmenden Heizblockgehäuse sind Dichtelemente vorgesehen, die von den Kontakt- und/oder Kühlelementen durchragt und durch Klemmung zwischen dem Steuereinrichtungsträger und dem Heizblockgehäuse abgedichtet sind.

Das Dokument EP 1 916 873 B1 betrifft ein wärmeerzeugendes Element, insbesondere zur Lufterwärmung in einem elektrischen Zuheizer eines Kraftfahrzeuges. Das wärmeerzeugende Element weist wenigstens ein PTC-Heizelement und ein das PTC-Heizelement umgebendes, isolierendes Gehäuse auf, sowie elektrische Leiterbahnen, die an gegenüberliegenden Seiten an dem PTC-Heizelement anliegen. Hierbei umfasst das Gehäuse ein Gehäuseschalenelement und ein Schalengegenelement, die unter Zwischenlage eines an gegenüberliegenden Stirnseiten der Gehäuseelemente anliegenden Dichtstreifens aneinander anliegen. Das Dichtelement dichtet hierbei die Gehäuseelemente bei einer von außen auf das wärmeerzeugende Element wirkenden und die Leiterbahnen gegen das wenigstens eine PTC-Heizelement drückenden Druckkraft gegeneinander ab, wobei das Dichtelement das wenigstens eine PTC-Heizelement abdichtend umschließt.

Das Dokument KR 20090098029 A betrifft eine Heizvorrichtung mit PTC-Heizelementen. Jeweils einer PTC-Heizelementeinheit sind rechts und links von dem PTC-Heizelement angeordnete Kühlrippen zugeordnet. Am PTC-Heizelement sind Anschlüsse zum Anschluss an eine Spannungsversorgung vorgesehen.

### Darstellung der Erfindung, Aufgabe, Lösung, Vorteile

Es ist die Aufgabe der Erfindung, eine verbesserte elektrische Heizvorrichtung zu schaffen.

Die Aufgabe wird mit einer elektrischen Heizvorrichtung mit den Merkmalen von Anspruch 1 gelöst.

Das Dichtungselement ist bevorzugt dichtend und ohne Spaltbildung an dem Gehäusedeckel und am Gehäuseboden im Bereich der Öffnung angeordnet. Mittels des Dichtungselements kann somit eine dichte Verbindung zwischen dem Heizelement und dem Gehäuse hergestellt werden. Dadurch kann ein Eindringen von Partikeln, Staub bzw. allgemein Schmutz und/oder Wasser verhindert werden. Das Dichtungselement kann hierbei ein elastisches Dichtungselement, beispielsweise eine Formdichtung, aus einem elastischen Material, sein. Das Dichtungselement kann auch eine Klebstoff-Feder-Verbindung sein, die eine gewisse Elastizität aufweist. Alternativ kann das Dichtungselement ein relativ starres Dichtungselement sein, das mit dem Gehäusedeckel im Bereich der Öffnung durch eine Fase an dem Gehäuse und/oder dem Dichtungselement eine dichte Verbindungszone ausbildet. Somit kann mit dem Dichtungselement die dichte Verbindungszone zwischen dem Heizelement und dem Gehäusedeckel und dem Gehäuseboden hergestellt werden.

Es werden nicht mehrere Dichtungsteilelemente benötigt, wie dies im Stand der Technik der Fall ist. Das Dichtungselement ist hierbei mit dem Gehäusedeckel, insbesondere im Bereich der Öffnung, verbunden oder verbindbar. Im nicht montierten Zustand der elektrischen Heizvorrichtung liegen das mindestens eine Heizelement, weiches bevorzugt ein Aluminiumgehäuse und darin angeordnete PTC-Heizelemente aufweist, das zugehörige Dichtungselement und das Gehäuse separat vor. Das Dichtungselement ist nicht mit dem Heizelement verbunden, insbesondere nicht mit den PTC-Heizelementen verbunden. Beim Montieren kann das Heizelement in das Gehäuse eingesetzt oder angeordnet werden, das Dichtungselement kann auf dem mindestens einen Heizelement angeordnet werden und das Gehäuse kann verschlossen werden. Ein Anschlusselement an einer elektrischen Versorgungseinrichtung des Heizelementes kann hierbei bevorzugt durch das Dichtungselement hindurchgeschoben werden.

Erfindungsgemäß sind sowohl in dem Gehäusedeckel als auch in dem Gehäuseboden Öffnungen vorgesehen. In jeder Öffnung ist ein Dichtungselement zur Aufnahme des Heizelementes vorgesehen. Die einzelnen Dichtungselemente können aber auch verbunden sein und als ein einstückiges Dichtungselement vorliegen. Die Heizelemente sind bevorzugt in einer Reihe neben- bzw. hintereinander angeordnet und bilden einen Heizblock aus. Die Heizelemente können alternativ oder zusätzlich auch in mehreren nebeneinanderliegenden Reihen angeordnet sein.

Hierbei kann am Gehäusedeckel und/oder an dem Gehäuseboden, insbesondere an einem inneren Umfang im Bereich der Öffnung im Gehäusedeckel und/oder Gehäuseboden eine Fase vorgesehen sein. Insbesondere ist die Fase jeweils an einem Innenrand der Öffnung angeordnet. Hierbei kann die Fase eine durchgehende Fase sein oder abschnittsweise im Bereich der Öffnung angeordnet sein.

Ferner ist bevorzugt vorgesehen, dass an einem Dichtungselementumfang jedes Dichtungselementes eine Fase angeordnet ist. Die Fase des Dichtungselementes und die Fase des Gehäusedeckels und/oder Gehäusebodens sind derart gestaltet, dass eine formschlüssige Verbindung zwischen dem Dichtungselement und dem Gehäusedeckel und/oder dem Gehäuseboden im Bereich der jeweiligen Öffnung realisierbar ist.

Die Fase ist bevorzugt eine Formgebung an einer abgeschrägten Fläche und/oder Kante der Innenrandfläche des Gehäusedeckels und/oder Gehäusebodens im Bereich der Öffnung. Die Fase kann hierbei einen Winkel von ungefähr 30° bis 70°, bevorzugt 45°, zu der der Öffnung zugewandten Ebene des Gehäusedeckels und/oder Gehäusebodens aufweisen. Die Innenrandfläche erstreckt sich hierbei bevorzugt im Wesentlichen senkrecht zur Erstreckungsrichtung des Gehäusedeckels. Das Dichtungselement kann eine gewisse Elastizität aufweisen und komprimierbar sein. Dadurch kann es beim Montieren zu einer sogenannten Presspassung kommen. Hierbei kann es ermöglicht sein, dass ein geringerer Kraftaufwand notwendig ist, um das Dichtungselement optimal in die Öffnung im Gehäusedeckel und Gehäuseboden anzuordnen, insbesondere einzupassen. Dadurch kann das Heizelement jeweils optimal in der Öffnung aufgenommen und in dieser sicher angeordnet werden. Die Fase kann neben der Realisierung der dichten Verbindung auch die Positionierung des Dichtelementes im Gehäusedeckel und/oder Gehäuseboden verbessern.

In einer Ausgestaltung der elektrischen Heizvorrichtung kann an einer Verbindungslinie zwischen dem Heizelement und dem Gehäusedeckel und/oder dem Gehäuseboden im Bereich der Öffnung ein Silikon-Kleber und/oder Silikon-Gel und/oder flüssiges Silikon angeordnet sein. Hierbei haben der Silikon-Kleber und/oder das Silikon-Gel die Funktion des Dichtungselements. Hierdurch kann die formschlüssige Verbindung optimiert werden. Die Dichtungsfunktion zwischen dem Dichtungselement und dem Gehäusedeckel und Gehäuseboden kann stabil und insgesamt dicht gegenüber Staub, Schmutz und Feuchtigkeit sein.

Das Gehäuse der elektrischen Heizvorrichtung weist zwei Gehäusehalbschalen auf, wobei die Gehäusehalbschalen im Wesentlichen senkrecht zum Gehäusedeckel und/oder zum Gehäuseboden angeordnet sind. Die Erstreckungsrichtung der Heizelemente ist bevorzugt entlang der Gehäusehalbschalen und somit im Wesentlichen senkrecht zum Gehäusedeckel und/oder Gehäuseboden gerichtet. An der Stoßkante der beiden Gehäusehalbschalen kann bevorzugt ein zweites zusätzliches Dichtungselement angeordnet sein.

Erfindungsgemäß ist das Gehäuse ein Kunststoff-Gehäuse, wobei zumindest die Gehäusehalbschalen aus einem Kunststoffmaterial gefertigt sind. Hierdurch kann ein elektrisch isolierendes Gehäuse realisiert werden. Außerdem weist das Gehäuse ein relativ geringes Gewicht auf Grund des niedrigen spezifischen Gewichts des Kunststoffmaterials auf.

Bevorzugt weist jedes Heizelement der elektrischen Heizvorrichtung ein PTC-Heizelement auf, insbesondere ein HV-PTC-Heizelement. Das PTC-Heizelement weist einen positiven Temperaturkoeffizienten auf, wobei das HV-PTC-Heizelement mit einer Spannung größer als 60 V betrieben werden kann. Das PTC-Heizelement selbst ist bevorzugt in einem Aluminiumgehäuse angeordnet.

Die Heizelemente, insbesondere die im Aluminiumgehäuse angeordneten PTC-Heizelemente mit Anschlüssen, bilden bevorzugt einen Heizblock aus. Hierbei kann der Heizblock als ein Element aus dem Gehäuse entnommen werden.

Die Aufgabe wird ebenfalls mit einem Kraftfahrzeug mit einer erfindungsgemäßen elektrischen Heizvorrichtung gelöst. Hierbei sind die Heizelemente, insbesondere die PTC-Heizelemente, jeweils in einem Dichtungselement in dem Gehäusedeckel und im Gehäuseboden angeordnet. Das jeweilige Dichtungselement ist eine Formdichtung und/oder eine Kleber/Feder-Kombination. Alternativ oder zusätzlich können der Gehäusedeckel und/oder der Gehäuseboden eine Fase an einer Innenkante einer das Dichtungselement und das Heizelement aufnehmenden Öffnung aufweisen. Zusätzlich kann das Dichtungselement ebenfalls eine Fase aufweisen, die passgenau zur Fase des Gehäusedeckels und/oder des Gehäusebodens ausgestaltet ist.

Weitere vorteilhafte Ausgestaltungen sind durch die nachfolgende Figurenbeschreibung und durch die Unteransprüche beschrieben.

### Kurze Beschreibung der Zeichnungen

Nachstehend wird die Erfindung auf der Grundlage zumindest eines Ausführungsbeispiels anhand der Figuren der Zeichnung näher erläutert. Es zeigen:
- Fig. 1: ein erstes Ausführungsbeispiel einer erfindungsgemäßen elektrischen Heizvorrichtung in perspektivischer Darstellung,
- Fig. 2: eine Gehäusehalbschale des Kunststoffrahmens der elektrischen Heizvorrichtung in perspektivischer Darstellung,
- Fig. 3: einen Heizblock mit Heizelementen der elektrischen Heizvorrichtung in perspektivischer Darstellung,
- Fig. 4: eine Ansicht auf einen Gehäusedeckel der elektrischen Heizvorrichtung,
- Fig. 5: das Heizelement (rechts) und den Heizblock (links) mit Heizelementen ohne Dichtungselement,
- Fig. 6: den Heizblock ohne Dichtungselemente (oben) und ein Heizblock mit Dichtungselementen (mittlere Figur) sowie eine Draufsicht auf den Gehäusedeckel (unten),
- Fig. 7: einen Teilausschnitt des Heizblocks und zwei Gehäusehalbschalen in Explosionsdarstellung (oben), das Gehäuse mit Dichtungselementen in zusammenmontiertem Zustand in einer perspektivischen Ansicht (Mitte) und eine Draufsicht auf den Gehäusedeckel (unten),
- Fig. 8: den Heizblock mit Dichtungselementen und zwei Gehäusehalbschalen in Explosionsdarstellung (oben), das Gehäuse mit Dichtungselementen in zusammenmontiertem Zustand in einer perspektivischen Ansicht (Mitte) und eine Draufsicht auf den Gehäusedeckel (unten),
- Fig. 9: den Heizblock in Explosionsdarstellung und einen Ausschnitt aus dem Gehäusedeckel,
- Fig. 10: eine perspektivische Draufsicht auf das Gehäuse mit unterschiedlichen Dichtungselementen,
- Fig. 11: ein weiteres Ausführungsbeispiel einer elektrischen Heizvorrichtung mit Heizelementen,
- Fig. 12: eine Detailansicht der elektrischen Heizvorrichtung von Figur 11,
- Fig. 13: eine Detailansicht der elektrischen Heizvorrichtung von Figur 12 mit Dichtungselementen,
- Fig. 14: eine perspektivische Ansicht der elektrischen Heizvorrichtung (oben) und der Heizelemente (unten),
- Fig. 15: eine perspektivische Ansicht der elektrischen Heizvorrichtung (oben) mit Dichtungselement und der Heizelemente (unten),
- Fig. 16: eine perspektivische Darstellung des Kunststoffgehäuses mit Dichtungselement.

### Bevorzugte Ausführung der Erfindung

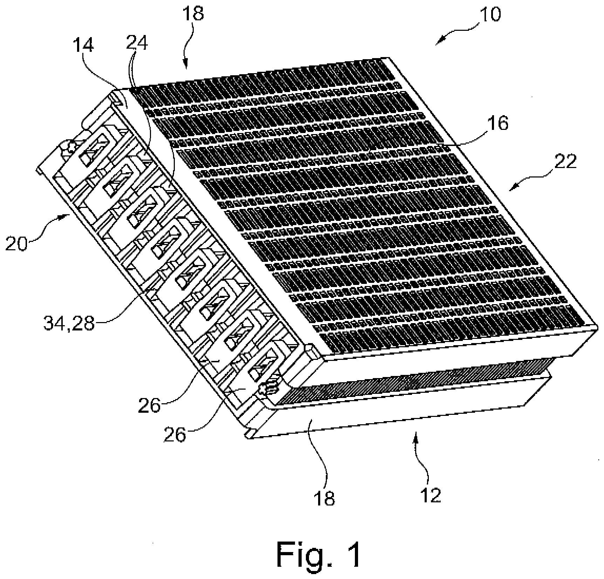

Figur 1 zeigt eine elektrische Heizvorrichtung 10, die ein Gehäuse 12 aufweist, in perspektivischer Darstellung. Das Gehäuse 12 weist erfindungsgemäß einen Kunststoffrahmen 14 auf. Der Kunststoffrahmen 14 dient der Aufnahme von nicht dargestellten Heizelementen, die bevorzugt PTC-Heizelemente aufweisen. Das Gehäuse 12 weist zwei Gehäuse-Seitenelemente 16, zwei Gehäuse-Frontelemente 18, einen Gehäusedeckel 20 und einen Gehäuseboden 22 auf. Im Gehäusedeckel 20 und im Gehäuseboden 22 sind jeweils Öffnungen 24 vorgesehen, in die jeweils ein nicht dargestelltes Heizelement mit einem Dichtungselement 26 angeordnet werden kann. Hierbei ist das Heizelement jeweils in dem Dichtungselement 26 angeordnet und/oder durch dieses gehaltert. Das Dichtungselement 26 ist bevorzugt ein flexibles Dichtungselement 26 und kann eine Formdichtung aus einem elastischen Material, insbesondere einem elastischen Kunststoff, darstellen. Alternativ kann das Dichtungselement 26 als Klebstoff-Feder-Kombination ausgelegt sein. Hierdurch kann ein Ausgleich von Fertigungstoleranzen der Öffnungen 24 im Gehäusedeckel 20 und/oder Gehäuseboden 22 erfolgen und eine Abdichtung des Gehäuses 12 gegen Schmutz, Staub, Feuchtigkeit realisiert werden. Insbesondere kann ein Schutz der PTC-Heizelemente vor Staub und/oder Wasser sichergestellt werden. An dem Dichtungselement 26 kann eine Fase 28 angebracht sein. An dem Gehäusedeckel 20 und/oder dem Gehäuseboden 22 kann im Bereich der Öffnung 24 ebenfalls eine Fase 34 angebracht sein.

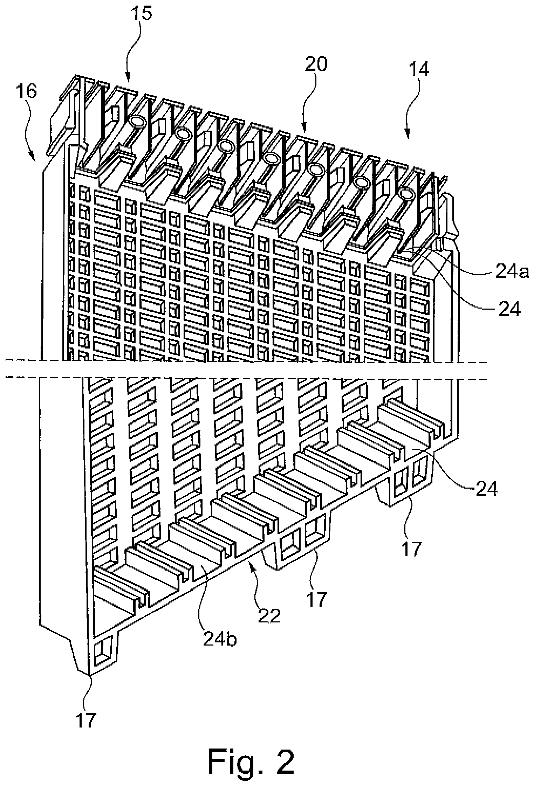

Figur 2 zeigt ein Ausführungsbeispiel einer Gehäusehalbschale 15 des Gehäuses 12, insbesondere des Kunststoffrahmens 14. Gleiche Gegenstände sind mit den gleichen Bezugszeichen bezeichnet, wie in Figur 1. Die Gehäusehalbschale 15 weist das Gehäuse-Seitenteil 16 sowie jeweils eine Hälfte des Gehäuse-Frontteils 18, des Gehäusedeckels 20 und des Gehäusebodens 22 auf. Im Gehäusedeckel 20 und im Gehäuseboden 22 sind Öffnungen 24 zur Aufnahme der Dichtungselemente 26 eingebracht. Die Öffnungen 24 können als durchgehende Öffnungen 24a ausgebildet sein, wie dies am Gehäusedeckel 20 dargestellt ist. Die Öffnungen 24 können auch als Sacklöcher 24b mit einem Öffnungsboden 19 ausgebildet sein, wie dies am Gehäuseboden 22 dargestellt ist. Ferner sind am Gehäuseboden 22 Abstandselemente 17 angeordnet.

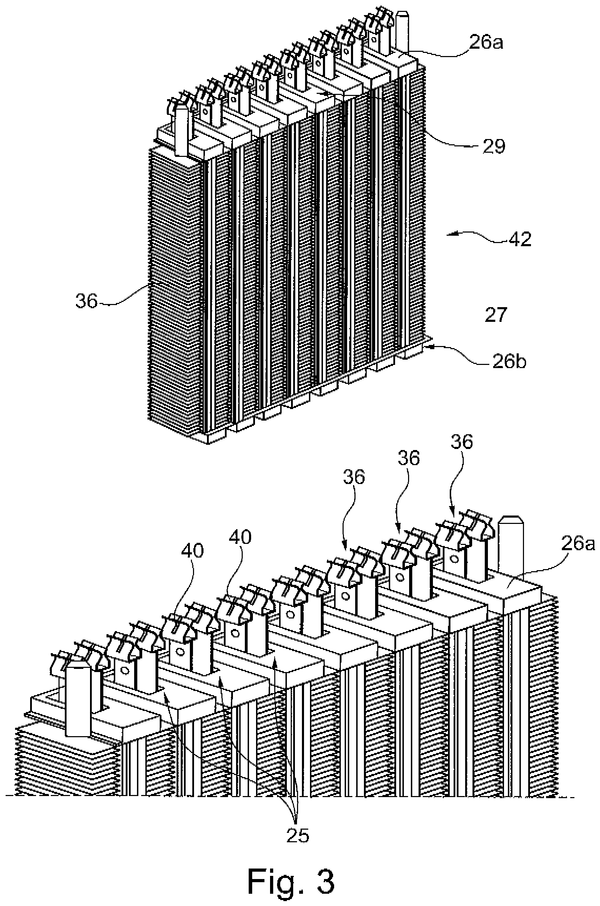

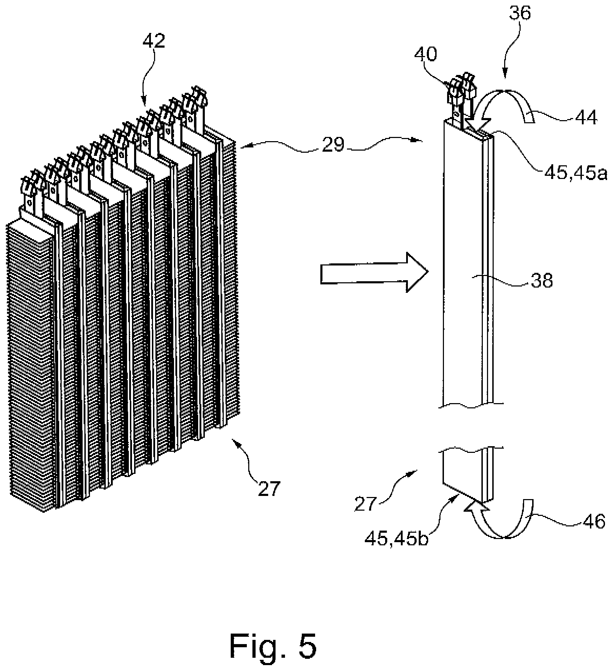

Figur 3 zeigt einen Heizblock 42 mit parallel angeordneten elektrischen Heizelementen 36. Gleiche Gegenstände sind mit den gleichen Bezugszeichen bezeichnet, wie in Figur 1 und Figur 2. Zur detaillierteren Beschreibung der elektrischen Heizelemente 36 wird auf Figur 5 verwiesen. Dichtungselemente 26 sind am Heizelement 36 jeweils im mit den Rechtecken markierten Bodenbereich 27 und Deckelbereich 29 angeordnet. Das Dichtungselement 26 im Deckelbereich 29 ist hierbei mit der Bezugsziffer 26a bezeichnet und das Dichtungselement im Bodenbereich 27 ist mit der Bezugsziffer 26b bezeichnet. Im unteren Abschnitt von Figur 3 ist in detaillierter Darstellung die Anordnung der Heizelemente 36 in den Dichtungselementen 26a dargestellt. Jedes Heizelement 36 ragt mit einem Anschlusselement 40 durch eine Öffnung 25 des Dichtungselementes 26.

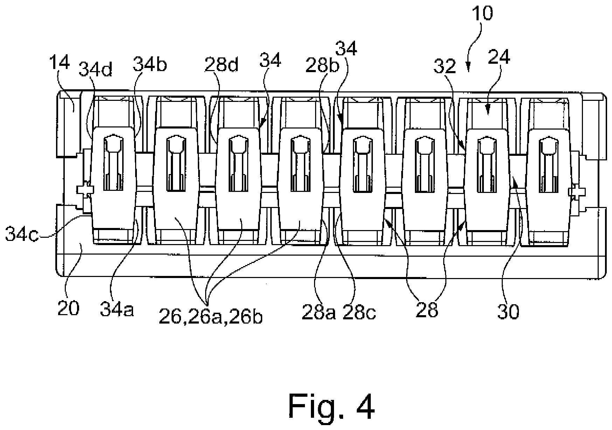

Figur 4 zeigt die elektrische Heizvorrichtung 10 als Draufsicht auf den Gehäusedeckel 20. Gleiche Gegenstände sind mit den gleichen Bezugszeichen bezeichnet, wie in den Figuren 1, 2 und 3. Das Dichtungselement 26, 26a weist an beiden Dichtungselementseiten 30 und 32 jeweils zwei Fasen 28 a, 28b und 28c, 28d auf. In jeder der Öffnungen 24 ist jeweils ein Dichtungselement 26, 26a aufgenommen. Der Gehäusedeckel 20 weist im Bereich der Öffnung 24 ebenfalls die Fase 34 auf. Die Fase 34 ist jeweils an vier Positionen jeder Öffnung 24 angeordnet, sodass jeder Fase 28, 28a, 28b, 28c, 28d des Dichtungselements 26 eine Fase 34, 34a, 34b, 34c, 34d des Gehäusedeckels 20 und/oder Gehäusebodens 22 gegenüberliegend angeordnet ist. Die Fase 28 und die Fase 34 sind so ausgestaltet, dass diese eine formschlüssige Verbindung herstellen und das Dichtungselement 26, 26a formschlüssig in der Öffnung 24 des Gehäusedeckels 20 angeordnet ist.

Figur 5 zeigt in der rechten Figurenhälfte das Heizelement 36 mit einem Aluminiumgehäuse 38, das als Aluminiumflachrohr 38 ausgeführt ist und in dem nicht dargestellte PTC-Heizelemente innenliegend angeordnet sind. Gleiche Gegenstände sind mit den gleichen Bezugszeichen bezeichnet, wie in den Figuren 1, 2, 3 und 4. Im Betrieb der elektrischen Heizvorrichtung 10 liegt das Aluminiumgehäuse 38 nicht auf Potential. Jedes Heizelement 36 weist den Anschluss 40 auf, mittels dem das Heizelement 36 an eine elektrische Versorgung angeschlossen werden kann. Mehrere Heizelemente 36 werden in der elektrischen Heizvorrichtung 10 parallel angeordnet und bilden den Heizblock 42 aus, der in der linken Figurenhälfte dargestellt ist.

An der mit dem Pfeil 44 und dem Pfeil 46 markierten Position kann Schmutz, und/oder Partikel und/oder Staub und/oder Wasser durch einen offenen Bereich 45 in das Aluminiumgehäuse 38 eindringen und die PTC-Heizelemente 36 schädigen. Der offene Bereich 45a ist im Deckelbereich 29 angeordnet und der offene Bereich 45b ist im Bodenbereich 27 angeordnet.

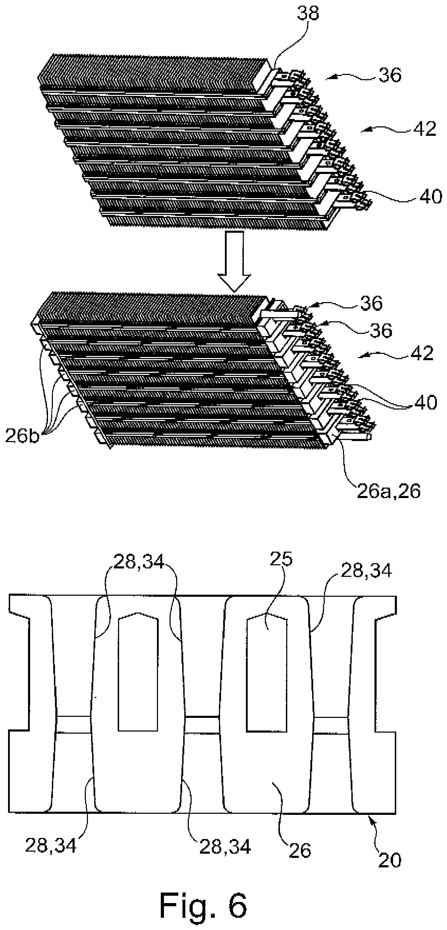

Figur 6 zeigt den Heizblock 42 von Figur 5. Gleiche Teile sind mit den gleichen Bezugszeichen bezeichnet. Im oberen Teil der Figur ist der Heizblock 42 ohne Dichtungselement 26 dargestellt, im mittleren Teil von Figur 4 ist der Heizblock 42 jeweils mit dem Dichtungselement 26, 26a, 26b gezeigt. Das jeweilige Dichtungselement 26, 26a, 26b verschließt den jeweiligen offenen Bereich 45, 45a, 45b des Aluminiumgehäuses 38. Durch das Dichtungselement 26a ragt jeweils der Anschluss 40 hindurch. Im unteren Teil von Figur 6 ist der Gehäusedeckel 20 mit in den Öffnungen 24 angeordneten Dichtungselementen 26, 26a aber ohne Heizelemente 36 schematisch als Draufsicht dargestellt. Das Dichtungselement 26, 26a weist die Öffnung 25 zur Aufnahme des Heizelementes 36 auf. An den mit den Pfeilen markierten Positionen sind die Fasen 28, 28a, 28b, 28c und/oder 28d am Dichtungselement 26 und/oder die Fasen 34, 34a, 34b, 34c und/oder 34d an dem Gehäusedeckel 20 angeordnet.

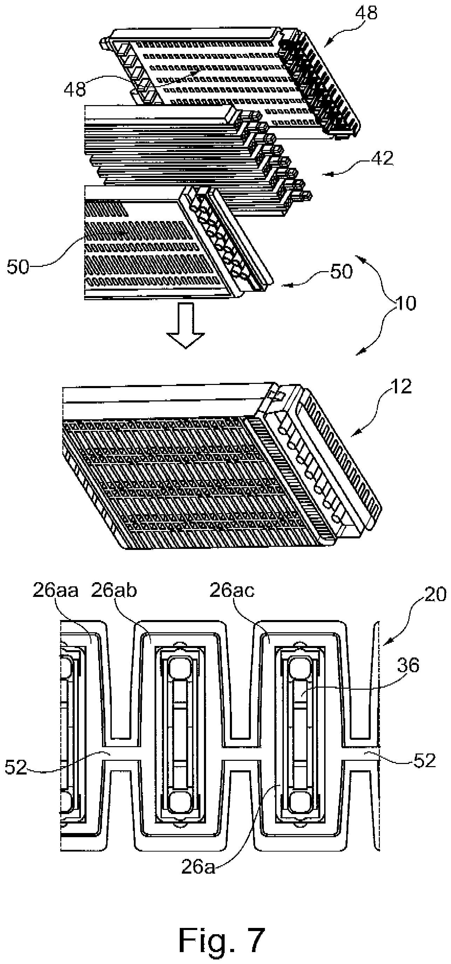

Figur 7 zeigt den oberen Teil des Heizblocks 42 und jeweils zwei Gehäusehalbschalen 48 und 50 des Gehäuses 12. Gleiche Gegenstände sind mit den gleichen Bezugszeichen bezeichnet und es wird auf die Beschreibung zu den Figuren 1 bis 6 verwiesen. In dem oberen Teil von Figur 7 ist die elektrische Heizvorrichtung 10 in Explosionsdarstellung gezeigt, in der der Heizblock 42 und die Gehäusehalbschalen 48 und 50 als einzelne Komponenten zu erkennen sind. Im mittleren Teil von Figur 7 ist die elektrische Heizvorrichtung 10 zusammenmontiert und es ist lediglich das Gehäuse 12 als Ganzes zu erkennen. Im unteren Teil von Figur 7 ist eine Draufsicht auf den Gehäusedeckel 20 dargestellt. In jeder Öffnung 24 des Gehäusedeckels 20 ist ein Heizelement 36 angeordnet, wobei das Heizelement 36 jeweils von einem Dichtungselement 26, 26a aufgenommen wird, welches die Öffnung 24 zumindest teilweise so verschließt, dass kein Schmutz und/oder Wasser in das Aluminiumgehäuse 38 eindringen kann. Die einzelnen Dichtungselemente 26, 26a sind zusammengefügt und als eine einstückige Dichtung ausgeführt, wobei jedes der Dichtungselemente 26 mit einem Steg 52 verbunden ist. Somit ist ein einstückiges Dichtungselement 54 realisiert, welches aus Dichtungselementen 26, 26aa, 26ab, 26ac, 26an und Stegen 52, 52a, 52b, 52c, 52n-1 besteht. Hierbei bezeichnet n die Anzahl der Heizelement 36 und die Anzahl der Öffnungen 24. Hierdurch ist die Montage der elektrischen Heizvorrichtung 10 sehr einfach zu realisieren, indem der Heizblock 42, das Dichtungselement 54 und die Gehäusehalbschalen 48 und 50 zueinander angeordnet und anschließend zusammenmontiert werden.

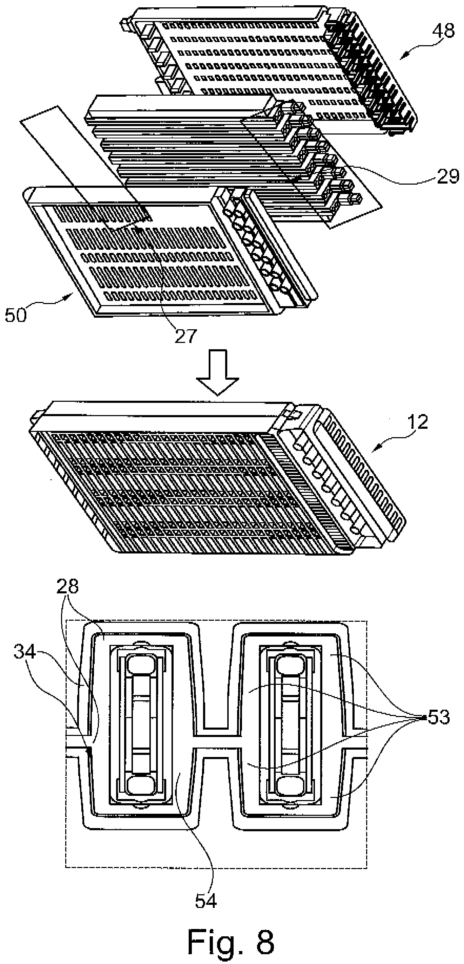

Figur 8 zeigt den kompletten Heizblock 42 und jeweils zwei Gehäusehalbschalen 48 und 50 des Gehäuses 12. Gleiche Gegenstände sind mit den gleichen Bezugszeichen bezeichnet und es wird auf die Beschreibung zu Figur 7 verwiesen. Im Bodenbereich 27 sind Dichtungselemente 26, 26b angeordnet. Die Dichtungselemente 26b können als einzelne Dichtungselemente 26b oder als einstückiges Dichtungselement (nicht dargestellt) ausgebildet sein. Im unteren Teil von Figur 8 ist in Draufsicht das einstückige Dichtungselement 54 aus Dichtungselementen 26a dargestellt. Das Dichtungselement 54 ist mit den Dichtungselementen 26a jeweils in Öffnungen 24 des Gehäusedeckels 20 angeordnet. Mit den Pfeilen 53 sind die durch die jeweiligen Fasen 34 am Gehäusedeckel 20 und die Fasen 28 am Dichtungselement 26, 26a, 54 realisierten Dichtungsbereiche 53 dargestellt. Die Fasen 34 und 28 ermöglichen eine genaue Positionierung und Montage der Heizelemente 36 und der Dichtungselemente 26, 26a, 54 im Gehäusedeckel 20. Der Gehäuseboden 22 kann ebenfalls nicht dargestellte Fasen aufweisen, die mit nicht dargestellten Fasen an dem Dichtungselement 26b zusammenwirken und einen Dichtungsbereich am Gehäuseboden 22 ausbilden.

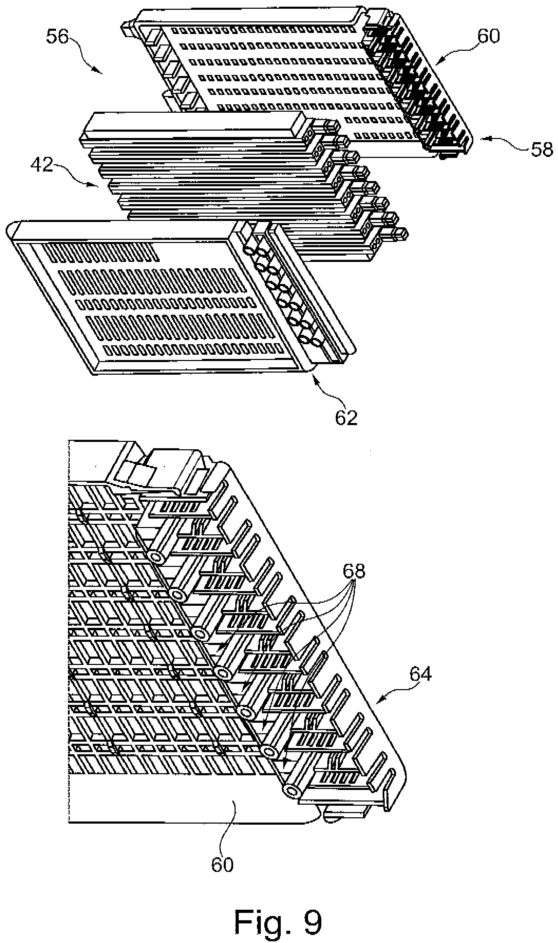

Figur 9 zeigt eine elektrische Heizvorrichtung 56, die sich von der in den Figuren 1 bis 8 gezeigten Ausführungsform durch ein modifiziertes Gehäuse 58 unterscheidet. Gleiche Gegenstände sind mit den gleichen Bezugszeichen bezeichnet und es wird auf die Beschreibung zu den Figuren 1 bis 8 verwiesen. Unterschiedlich ausgeführte Gegenstände, die zum Gehäuse 58 gehörig sind, werden mit anderen Bezugszeichen bezeichnet. Das Gehäuse 58 weist zwei Gehäusehalbschalen 60 und 62 auf, die ebenfalls zusammengefügt werden, wobei der Heizblock 42 zwischen den Gehäusehalbschalen 60 und 62 angeordnet ist. In die Gehäusehalbschalen 60 und 62 ist in einem Gehäusedeckel 64 jeweils ein flüssiger Silikongummi 66 an mit den Pfeilen 68 markierten Positionen als Dichtungselement injiziert. Dieser Silikongummi 66 kann ein nicht dargestelltes ausgeformtes Dichtungselement aus Silikongummi 66 im zusammenmontierten Zustand ausbilden. Anstelle des Silikongummis 66 kann auch ein Silikon-Kleber und/oder ein Silikon-Gel verwendet werden. Öffnungen im offenen Bereich 45, 45a, 45b des jeweiligen Heizelementes 36 können auf diese Weise verschlossen werden.

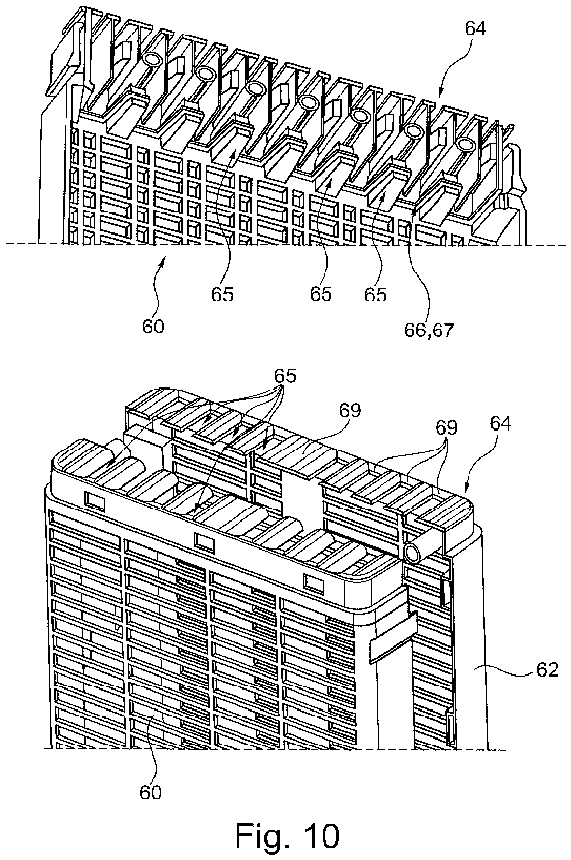

Figur 10 zeigt im oberen Teil die Gehäusehalbschale 60 mit dem Silikongummi 66, der einstückig als Silikondichtung 67 ausgebildet ist, die das Dichtungselement 67 ausbildet. Das Dichtungselement 67 ist als Band aus Silikongummi 66 ausgebildet und kann sich deshalb genau der Form einer jeweiligen Öffnung 65 am Gehäusedeckel 64 anpassen. Der untere Teil von Figur 10 zeigt die Gehäusehalbschale 60 und die Gehäusehalbschale 62 mit einem Dichtungselement 69, wobei das Dichtungselement 69 aus abgeformtem oder umgeformtem Silikongummi 66 am Gehäusedeckel 64 ausgebildet ist. Hierbei kann der Gehäusedeckel 64 mit flüssigem Silikongummi 66 umspritzt werden, der Silikongummi 66 kann aushärten und das Dichtungselement 69 ausbilden. Bevorzugt ist der Gehäusedeckel 64 hierbei als ein einstückiges Bauteil mit dem Dichtungselement 69 ausgebildet. Der Gehäusedeckel 64 kann aber auch bereits bei der Herstellung mit dem Dichtungselement 69 aus Silikon versehen werden.

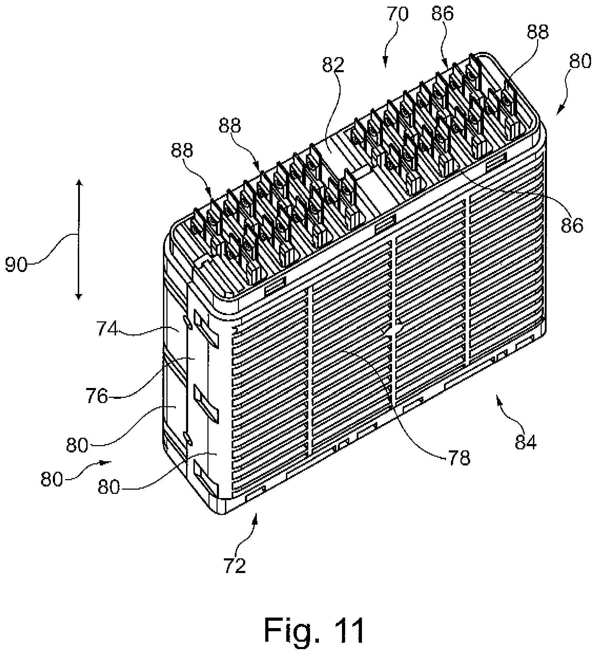

Figur 11 zeigt eine weitere Ausführungsform einer elektrischen Heizvorrichtung 70 in perspektivischer Darstellung. Die elektrische Heizvorrichtung 70 weist ein Gehäuse 72 auf. Das Gehäuse 72 weist zwei Gehäusehalbschalen 74 und 76 auf. Jede der Gehäusehalbschalen 74 und 76 weist ein Gehäuseseitenelement 78, Gehäuse-Frontteile 80, einen Gehäusedeckel 82 und einen Gehäuseboden 84 auf. Am Gehäusedeckel 82 sind Öffnungen 86 angeordnet, in die Heizelemente 88 angeordnet sind. Die Heizelemente 88 weisen bevorzugt PTC-Heizelemente 88 (Positive Temperature Coefficient) auf. Die Heizelemente 88 sind bevorzugt in mit dem Pfeil 90 bezeichneter Erstreckungsrichtung 90 der elektrischen Heizvorrichtung 70 im Wesentlichen parallel zueinander in einer Reihe angeordnet und bilden einen nicht dargestellten Heizblock aus. Die Heizelemente 88 können in einer Reihe oder in zwei nebeneinanderliegenden Reihen angeordnet sein.

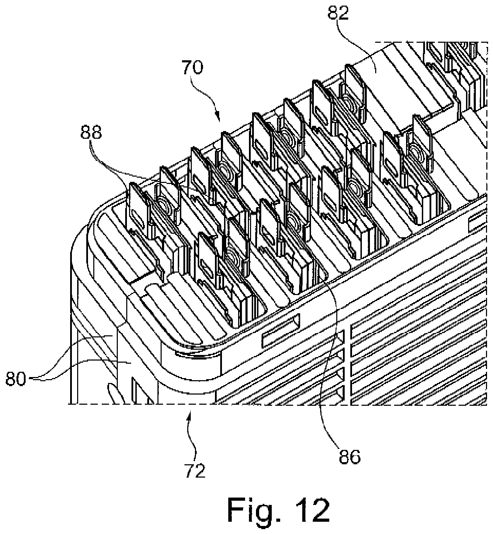

Figur 12 zeigt eine vergrößerte Ansicht der elektrischen Heizvorrichtung 70 mit unverschlossenen Öffnungen 86. Gleiche Teile sind mit den gleichen Bezugszeichen bezeichnet, wie in Figur 11.

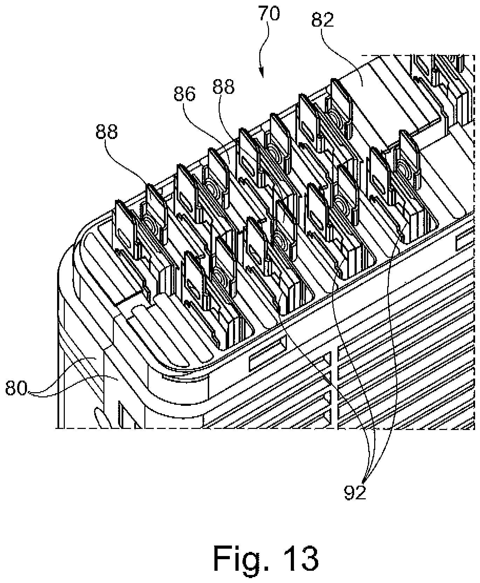

Figur 13 zeigt die Heizvorrichtung 70, wobei die Heizelemente 88 jeweils in einem Dichtungselement 92 aufgenommen sind. Das Dichtungselement 92 ist als eine Formdichtung oder als eine Klebstoff-Feder-Kombination ausgeführt. Das Dichtungselement 92 ist hierbei direkt auf dem Gehäusedeckel 82 und/oder dem nicht dargestellten Gehäuseboden 84 angeordnet. Hierdurch wird eine dichte Verbindung zwischen dem Heizelement 88 und dem Gehäusedeckel 82 im Bereich der Öffnungen 86 realisiert. Dadurch kann das Eindringen von Staub und/oder Schmutz sowie Wasser verhindert werden. Das Dichtungselement 92 kann aus einem flüssigen Silikongummi hergestellt sein. Alternativ kann das Dichtungselement 92 ein Silikon-Kleber und/oder Silikon-Gel sein. Das Dichtungselement 92 ist eine flexible Dichtung und ist direkt auf das Gehäuse 72 angebracht, insbesondere auf dem Gehäusedeckel 82 im Bereich der Öffnungen 86 angeordnet.

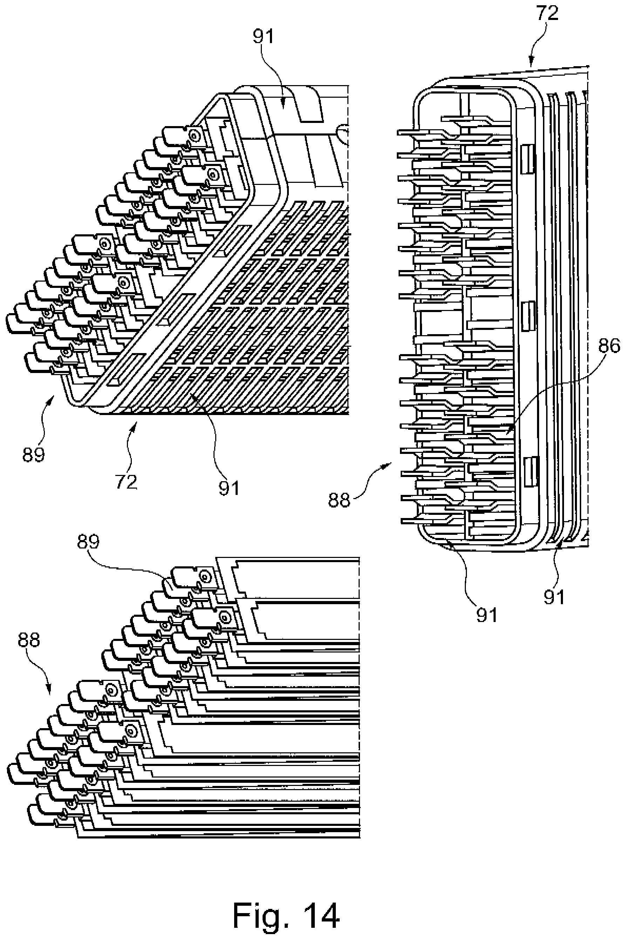

Figur 14 zeigt in perspektivischer Darstellung eine Detailansicht der elektrischen Heizvorrichtung 70 (obere Darstellung) und der Heizelemente 88 (untere Darstellung). Die Heizelemente 88 sind als PTC-Heizkörper 88 ausgeführt und in zwei nebeneinander angeordneten Reihen angeordnet. Die Heizelemente 88 weisen jeweils einen Anschluss 89 auf, mittels dem die Heizelemente 88 mit einer nicht dargestellten Stromversorgung verbunden werden können. Das Gehäuse 72 ist bevorzugt aus einem Kunststoff gefertigt und die Heizelemente 88 sind in Öffnungen 86 aufgenommen und angeordnet. An den mit Pfeilen 91 bezeichneten Bereichen des Gehäuses 72 ist kein Silikon angeordnet.

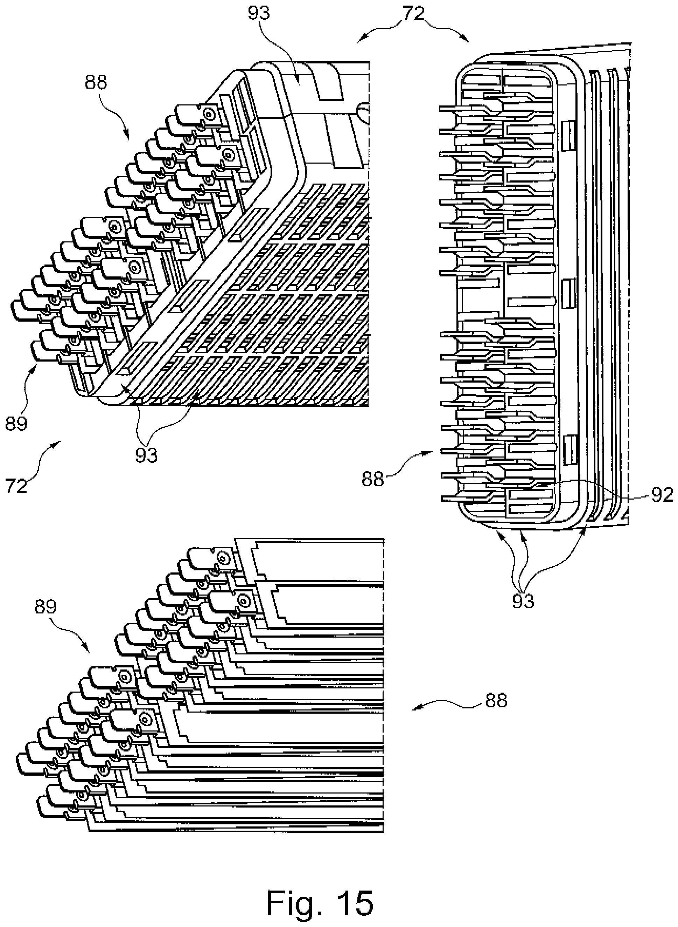

Figur 15 zeigt in perspektivischer Darstellung die elektrische Heizvorrichtung 70 von Figur 14. Gleiche Gegenstände sind mit denselben Bezugszeichen bezeichnet. An den mit den Pfeilen 93 bezeichneten Bereichen des Gehäuses 72 ist das Gehäuse mit Silikon umspritzt. Hierbei ist das Dichtungselement 92 durch Umspritzen mit Silikon ausgebildet. Dabei ist sowohl im Deckelbereich wie auch im Bodenbereich das Gehäuse 72 mit Silikon umspritzt. Hierdurch kann ein zusätzlicher Schutz vor Schmutz, Partikeln und/oder Wasser realisiert werden.

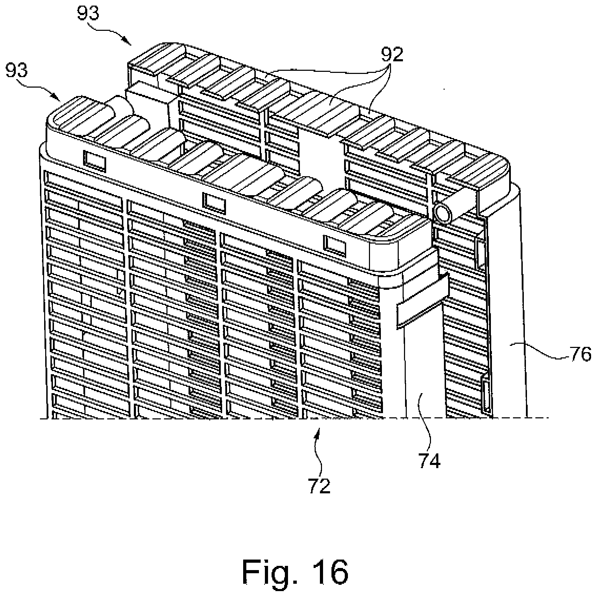

In Figur 16 ist der obere Teil des Kunststoffrahmens des Gehäuses 72 in beabstandeter Lage der Gehäusehalbschalen 74 und 76 mit dem Dichtungselement 92 gezeigt. An den mit den Pfeilen 93 bezeichneten Bereichen kann das Gehäuse 72 zusätzlich mit Silikon umspritzt werden.

## Patentansprüche

1. Elektrische Heizvorrichtung mit Heizelementen (36, 88), welche in einem Gehäuse (12, 56, 72) angeordnet sind, wobei das Gehäuse (12, 56, 72) einen Gehäusedeckel (20, 82), einen Gehäuseboden (22, 84), einen Kunststoffrahmen (14), zwei Gehäuse-Seitenelemente (16) und zwei Gehäuse-Frontelemente (18) aufweist, wobei in dem Gehäuseboden und in dem Gehäusedeckel Öffnungen (24, 86) vorgesehen sind, in die jeweils ein Heizelement (36, 88) mit einem Dichtungselement angeordnet sind, wobei in der jeweiligen Öffnung (24, 86) ein Dichtungselement (26, 54, 67, 69, 92) vorgesehen ist, in dem das jeweilige Heizelement (36, 88) angeordnet ist, wobei das Gehäuse (12, 56, 72) zwei Gehäusehalbschalen (48,50; 60,62) aufweist, wobei die Gehäusehalbschalen (48,50; 60,62) im Wesentlichen senkrecht zum Gehäusedeckel (20, 82) und dem Gehäuseboden (22, 84) angeordnet sind.

2. Elektrische Heizvorrichtung nach Anspruch 1, **dadurch gekennzeichnet, dass** am Gehäusedeckel (20, 82) und/oder am Gehäuseboden an einem inneren Umfang im Bereich der Öffnung (24, 86) des Gehäusedeckels (20, 82) und/oder des Gehäusebodens (22, 84) eine Fase (34, 34a, 34b, 34c, 34d) vorgesehen ist.

3. Elektrische Heizvorrichtung nach einem der vorhergehenden Ansprüche, **dadurch gekennzeichnet, dass** am Dichtungselementumfang eine Fase (28, 28a, 28b, 28c, 28d) vorgesehen ist, wobei die Fase (28, 28a, 28b, 28c, 28d) des Dichtungselementes (26) und die Fase (34, 34a, 34b, 34c, 34d) des Gehäusedeckels (20) und/oder des Gehäusebodens zusammenwirken.

4. Elektrische Heizvorrichtung nach einem der vorhergehenden Ansprüche, **dadurch gekennzeichnet, dass** das Gehäuse (20, 56, 72) ein Kunststoff-Gehäuse ist, wobei zumindest die Gehäusehalbschalen (48, 50; 60, 62) aus Kunststoff gefertigt sind.

5. Elektrische Heizvorrichtung nach einem der vorhergehenden Ansprüche, **dadurch gekennzeichnet, dass** das Gehäuse (20, 56, 72) ein Kunststoff-Gehäuse ist.

6. Elektrische Heizvorrichtung nach einem der vorhergehenden Ansprüche, **dadurch gekennzeichnet, dass** die Heizelemente (36, 88) jeweils ein PTC-Heizelement oder ein HV-PTC-Heizelement sind.

7. Elektrische Heizvorrichtung nach einem der vorhergehenden Ansprüche, **dadurch gekennzeichnet, dass** die Heizelemente (36, 88) oder die PTC-Heizelemente einen Heizblock (42) bilden.

8. Kraftfahrzeug mit einer elektrischen Heizvorrichtung (10, 70) nach einem der Ansprüche 1 bis 7.

## Claims

1. An electric heating device with heating elements (36, 88), disposed in a housing (12, 56, 72), wherein the housing (12, 56, 72) has a housing cover (20, 82), a housing base (22, 84), a plastic frame (14), two housing side elements (16) and two housing front elements (18), wherein in the housing base and in the housing cover, openings (24, 86) are provided in which a respective heating element (36, 88) with a sealing element is disposed, wherein in the respective opening (24, 86), a sealing element (26, 54, 67, 69, 92) is provided in which the respective heating element (36, 88) is disposed, wherein the housing (12, 56, 72) has two housing half-shells (48, 50; 60, 62), wherein the housing half-shells (48, 50; 60, 62) are disposed substantially perpendicular to the housing cover (20, 82) and to the housing base (22, 84).

2. The electric heating device according to claim 1, **characterised in that** a bevel (34, 34a, 34b, 34c, 34d) is provided on the housing cover (20, 82) and/or on the housing base at an inner perimeter in the area of the opening (24, 86) of the housing cover (20, 82) and/or of the housing base (22, 84).

3. The electric heating device according to one of the preceding claims, **characterised in that** a bevel (28, 28a, 28b, 28c, 28d) is provided on the sealing element perimeter, wherein the bevel (28, 28a, 28b, 28c, 28d) of the sealing element (26) and the bevel (34, 34a, 34b, 34c, 34d) of the housing cover (20) and/or of the housing base interact.

4. The electric heating device according to one of the preceding claims, **characterised in that** the housing (20, 56, 72) is a plastic housing, wherein at least the housing half-shells (48, 50; 60, 62) are fabricated of plastic.

5. The electric heating device according to one of the preceding claims, **characterised in that** the housing (20, 56, 72) is a plastic housing.

6. The electric heating device according to one of the preceding claims, **characterised in that** the heating elements (36, 88) respectively are a PTC heating element or a HV PTC heating element.

7. The electric heating device according to one of the preceding claims, **characterised in that** the heating elements (36, 88) or the PTC heating elements form a heating block (42).

8. A motor vehicle having an electric heating device (10, 70) according to one of claims 1 to 7.

## Revendications

1. Dispositif de chauffage électrique comprenant des éléments chauffants (36, 88) qui sont disposés dans un boîtier (12, 56, 72), où le boîtier (12, 56, 72) présente un couvercle de boîtier (20, 82), un fond de boîtier (22, 84), un cadre en matière plastique (14), deux éléments latéraux (16) du boîtier et deux éléments frontaux (18) du boîtier, où il est prévu, dans le fond du boîtier et dans le couvercle du boîtier, des ouvertures (24, 86) dans lesquelles est disposé à chaque fois un élément chauffant (36, 88) comprenant un élément d'étanchéité, où il est prévu, dans l'ouverture respective (24, 86), un élément d'étanchéité (26, 54, 67, 69, 92) dans lequel est disposé l'élément chauffant respectif (36, 88), où le boîtier (12, 56, 72) présente deux demi-coques de boîtier (48, 50 ; 60, 62), où les demi-coques (48, 50 ; 60, 62) du boîtier sont disposées en étant pratiquement perpendiculaires au couvercle (20, 82) du boîtier et perpendiculaires au fond (22, 84) du boîtier.

2. Dispositif de chauffage électrique selon la revendication 1, **caractérisé en ce qu'**il est prévu, sur le couvercle (20, 82) du boîtier et / ou sur le fond du boîtier, un chanfrein (34, 34a, 34b, 34c, 34d) formé sur une circonférence intérieure située dans la zone de l'ouverture (24, 86) du couvercle (20, 82) du boîtier et / ou du fond (22, 84) du boîtier.

3. Dispositif de chauffage électrique selon l'une des revendications précédentes, **caractérisé en ce qu'**il est prévu un chanfrein (28, 28a, 28b, 28c, 28d) formé sur la circonférence de l'élément d'étanchéité, où le chanfrein (28, 28a, 28b, 28c, 28d) de l'élément d'étanchéité (26) et le chanfrein (34, 34a, 34b, 34c, 34d) du couvercle (20) du boîtier et / ou du fond du boîtier agissent de façon conjointe.

4. Dispositif de chauffage électrique selon l'une quelconque des revendications précédentes, **caractérisé en ce que** le boîtier (20, 56, 72) est un boîtier en matière plastique, où au moins les demi-coques (48, 50 ; 60, 62) du boîtier sont fabriquées en matière plastique.

5. Dispositif de chauffage électrique selon l'une quelconque des revendications précédentes, **caractérisé en ce que** le boîtier (20, 56, 72) est un boîtier en matière plastique.

6. Dispositif de chauffage électrique selon l'une quelconque des revendications précédentes, **caractérisé en ce que** les éléments chauffants (36, 88) sont à chaque fois un élément chauffant à coefficient de température positif - CTP - ou bien un élément chauffant CTP pour véhicule hybride (HV).

7. Dispositif de chauffage électrique selon l'une quelconque des revendications précédentes, **caractérisé en ce que** les éléments chauffants (36, 88) ou les éléments chauffants CTP forment un bloc chauffant (42).

8. Véhicule automobile comprenant un dispositif de chauffage électrique (10, 70) selon l'une quelconque des revendications 1 à 7.
